(19) **Europäisches Patentamt / European Patent Office / Office européen des brevets**

(11) **EP 2 279 569 B1**

(12) **FASCICULE DE BREVET EUROPEEN**

(45) Date de publication et mention de la délivrance du brevet:
**24.01.2018 Bulletin 2018/04**

(21) Numéro de dépôt: **09742289.3**

(22) Date de dépôt: **09.04.2009**

(51) Int Cl.:
*H04B 7/04* (2017.01)     *H04L 25/02* (2006.01)
*H04L 27/36* (2006.01)

(86) Numéro de dépôt international:
**PCT/FR2009/050638**

(87) Numéro de publication internationale:
**WO 2009/136091 (12.11.2009 Gazette 2009/46)**

(54) **PROCEDE DE COMPENSATION DYNAMIQUE D'UN MOUVEMENT RELATIF D'UNE ENTITE COMMUNICANTE**

VERFAHREN ZUR DYNAMISCHEN KOMPENSATION EINER RELATIVEN BEWEGUNG EINER KOMMUNIZIERENDEN EINHEIT

METHOD FOR THE DYNAMIC COMPENSATION OF A RELATIVE MOVEMENT OF A COMMUNICATING ENTITY

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **11.04.2008 FR 0852451**

(43) Date de publication de la demande:
**02.02.2011 Bulletin 2011/05**

(73) Titulaire: **Orange**
**75015 Paris (FR)**

(72) Inventeurs:
• **PHAN HUY, Dinh, Thuy**
**F-75004 Paris (FR)**
• **WONG, Man-Faï**
**F-93100 Montreuil (FR)**

(74) Mandataire: **Millet, Sandrine et al**
**Orange**
**IMTW/OLPS/IPL/PAT**
**Orange Gardens**
**44 Avenue de la République**
**CS 50010**
**92326 Châtillon Cedex (FR)**

(56) Documents cités:
**EP-A1- 1 091 533**

• **R. ZETIK, J. SACHS, R. THOMÄ: "Imaging of the propagation environment by UWB channel sounding" XXVIII TH URSI GENERAL ASSEMBLY, [Online] 23 septembre 2005 (2005-09-23), - 29 septembre 2005 (2005-09-29) pages 1-4, XP002516441 Ilmenau University of Technology, Dept. EEIT, P.O.B. 100565, 98684 Ilmenau, Germany Extrait de l'Internet: URL:http://www-emt.tu-ilmenau.de/EMTPub/up loads/pdf/N9543RIZEU.pdf> [extrait le 2009-02-23]**
• **YUANWEI JIN ET AL: "Position location by time reversal in communication networks" ACOUSTICS, SPEECH AND SIGNAL PROCESSING, 2008. ICASSP 2008. IEEE INTERNATIONAL CONFERENCE ON, IEEE, PISCATAWAY, NJ, USA, 31 mars 2008 (2008-03-31), pages 3001-3004, XP031251223 ISBN: 978-1-4244-1483-3**
• **TOURIN A ET AL: "Time reversal telecommunications in complex environments" COMPTES RENDUS - PHYSIQUE, ELSEVIER, PARIS, FR, vol. 7, no. 7, 1 septembre 2006 (2006-09-01), pages 816-822, XP024978786 ISSN: 1631-0705 [extrait le 2006-09-01]**
• **ZHOU X ET AL: "Assessment of MISO time reversal for short-range communications in the 5 GHz ISM band" WIRELESS PERSONAL COMMUNICATIONS, KLUWER ACADEMIC PUBLISHERS, DO, vol. 43, no. 2, 23 juin 2007 (2007-06-23), pages 759-776, XP019557988 ISSN: 1572-834X**

**Description**

Le domaine de l'invention est celui des télécommunications et plus précisément des techniques de communication radio entre des entités communicantes.

Plus particulièrement, l'invention concerne la transmission d'un signal basée sur une technique de retournement temporel entre deux entités communicantes comprenant au moins une antenne d'émission et au moins deux antennes de réception.

Un signal radio transmis par une antenne d'une entité communicante, dit signal d'antenne, subit des déformations en fonction des conditions de propagation entre un point d'origine défini en sortie de l'antenne d'origine et un point destinataire défini en entrée d'une antenne de l'entité communicante destinataire. Afin de limiter ces déformations, le signal d'antenne est préalablement distordu par application de coefficients de pré-égalisation en fonction des caractéristiques du canal de propagation entre ces deux antennes. Il est donc nécessaire de caractériser ce canal de propagation.

Parmi les méthodes de pré-égalisation existantes, se distinguent les méthodes basées sur le retournement temporel du fait de leur complexité réduite, de leur performance et de leur capacité intrinsèque à focaliser une onde radio sur une antenne de réception. Le retournement temporel permet de réduire significativement la dispersion temporelle du canal de propagation en focalisant l'énergie du signal reçu dans le temps et dans l'espace.

Le retournement temporel est une technique de focalisation des ondes, typiquement des ondes acoustiques, qui repose sur l'invariance de l'équation d'onde par renversement du temps. Ainsi, une onde temporellement inversée se propage comme une onde directe qui remonterait le temps. Une impulsion brève émise d'un point origine se propage dans un milieu de propagation. Une partie de cette onde reçue par un point destinataire est retournée temporellement avant d'être renvoyée dans le milieu de propagation. L'onde renvoyée converge vers le point origine en y reformant une impulsion brève et l'énergie de l'onde est focalisée sur le point d'origine, dit point focal. Le signal, focalisé par retournement temporel sur le point d'origine, est quasi identique dans sa forme au signal d'origine émis au point origine. Il y a ainsi recompression temporelle au point focal. En particulier, l'onde retournée converge d'autant plus précisément que le milieu de propagation est complexe.

La technique du retournement temporel est ainsi appliquée aux réseaux de communication radio pour annuler l'effet du canal de propagation sur le signal d'antenne, notamment en réduisant l'étalement du canal, et simplifier le traitement de symboles reçus après la traversée du canal. Le signal d'antenne émis par une antenne de l'entité communicante d'origine est ainsi pré-égalisé par application de coefficients obtenus à partir du retournement temporel de la réponse impulsionnelle du canal de propagation que ce signal d'antenne doit traverser. Le retournement temporel du canal de propagation appliqué au signal permet d'annuler l'effet de ce canal lors de la transmission du signal ainsi prédistordu à partir du point d'origine, et de focaliser le signal sur une antenne destinataire. La mise en oeuvre du retournement temporel nécessite ainsi la connaissance du canal de propagation par l'entité communicante d'origine.

Dans le cas d'une transmission bidirectionnelle en mode TDD, (pour "Time Division Duplex", en anglais), les transmissions dans un premier sens, par exemple d'une entité communicante d'origine vers une entité communicante destinataire, et les transmission dans un deuxième sens, inverse du premier sens, s'effectuent sur une même fréquence porteuse à des instants différents. Le canal de propagation correspondant au premier sens est alors sensiblement identique au canal de propagation dans le deuxième sens. Une entité communicante d'origine est ainsi capable d'estimer le canal de propagation à partir des signaux reçus.

Dans le cas d'une transmission bidirectionnelle en mode FDD, (pour Frequency Division Duplex" en anglais), les transmissions dans le premier sens et les transmissions dans le sens inverse sont effectuées dans des bandes de fréquences distinctes. La connaissance par l'entité communicante d'origine du canal de propagation correspondant au premier sens de transmission peut par exemple être obtenue par la délivrance d'une estimation du canal de propagation effectuée par l'entité communicante destinataire.

Cependant, lorsque les entités communicantes sont mobiles, l'estimation du canal effectuée à un instant donné par une entité communicante peut s'avérer erronée à un instant suivant du fait de la mobilité des entités communicantes. Cette erreur est qualifiée par rapport à un mouvement relatif défini en fonction du déplacement de l'entité communicante d'origine observé depuis l'entité communicante destinataire. Pour des mouvements relatifs importants il y a décorrélation entre l'estimée du canal de propagation, appliquée pour la pré-distorsion du signal, et le canal de propagation effectivement subi par le signal.

Ainsi, d'une part la pré-distorsion du signal est inadéquate et d'autre part la focalisation du signal sur une antenne destinataire n'est pas réalisée. La technique de pré-égalisation par retournement temporel donne ainsi de très mauvaises performances pour des entités communicantes se déplaçant rapidement.

L'article intitulé "From Theory to Practice: an overview of MIMO space-time codes wireless system", dont les auteurs sont David Gesbert, Mansoor Shafi, Da-shan Shui, Peter J. Smith, et Ayman Naguid, publié dans la revue IEEE Journal on Selected Areas in Communication vol 21 en avril 2003, exprime l'effet du mouvement relatif en fonction de la longueur d'onde, de la période de mesure de canal de propagation et des délais entre la mesure et la réception du signal d'antenne transmis. Cet article démontre alors que la technique de retournement temporel ne peut être utilisée que pour des périodes de mesure du canal de propagation faibles et des délais entre mesure et réception d'un signal pré-égalisé en fonction de cette mesure très courts.

Une solution consiste à estimer le mouvement relatif, ou bien encore d'estimer le déplacement de l'entité communicante d'origine, afin de mettre en oeuvre ou non la méthode de retournement temporel. La demande de brevet EP 109533, intitulée "A method and device for channel estimation in a mobile system, particularly in a mobile phone", propose ainsi un procédé d'estimation de canal comportant une étape d'estimation du déplacement d'un terminal mobile. Selon le déplacement estimé, la technique de transmission la plus adaptée est mise en oeuvre, par exemple le retournement temporel à faible déplacement et une technique de transmission ne nécessitant pas d'estimation de canal pour des déplacements importants.

Cette solution nécessite ainsi la mise oeuvre dans une entité communicante de deux modes de transmission. Outre l'accroissement de la complexité, le choix du seuil de déplacement ou du mouvement relatif permettant la sélection du mode de transmission adapté est délicat car fonction des contextes de propagation.

Il existe donc un besoin pour un procédé de compensation dynamique du mouvement relatif d'une entité communicante d'origine par rapport à une entité communicante destinataire pour la transmission d'un signal basée sur une technique de retournement temporel efficace pour un large éventail de mouvements relatifs des entités communicantes. Dans la suite, le mouvement relatif devra être compris comme le déplacement de l'entité communicante d'origine observé depuis l'entité communicante destinataire.

L'invention est adaptée pour des entités communicantes avec au moins une antenne d'émission et au moins deux antennes de réception. Une entité communicante peut être un terminal mobile, un point d'accès radio, une station de base terrestre ou satellitaire, ou tout équipement équipé d'une carte communicante.

Cette solution est en outre adaptée pour des entités communicantes avec plusieurs antennes d'émission pour lesquels un signal est composé d'une pluralité de signaux d'antenne par exemple pour des réseaux de type MIMO (pour "Multiple Input, Multiple Output en anglais").

Pour atteindre cet objectif, l'invention propose un procédé de compensation dynamique d'un mouvement relatif d'une entité communicante d'origine par rapport à une entité communicante destinataire comportant un ensemble d'antennes destinataires, un signal de données d'antenne émis par une antenne d'origine de l'entité communicante d'origine étant pré-égalisé par retournement temporel d'un canal de propagation estimé entre l'antenne d'origine et une antenne destinataire de référence à un instant courant. Le procédé comporte les étapes itératives de

- estimation par l'entité communicante destinataire d'un point focal courant,
- estimation d'un déplacement du point focal courant,
- sélection, pour un instant suivant, d'une antenne destinataire de référence destinée à l'estimation du canal de propagation et d'une antenne destinataire cible destinée à recevoir ledit signal de données.

Ainsi, un signal d'antenne est focalisé sur une antenne destinataire de référence mais les données sont restituées à partir du signal reçu par une antenne destinataire cible. La sélection des antennes cible et de référence est effectué itérativement par analyse du déplacement d'un point focal et anticipation du mouvement relatif. Ce procédé permet ainsi l'utilisation de la technique de pré-égalisation par retournement temporel pour un large éventail de mouvements relatifs par ajustement itératif des antennes destinataire de référence permettant l'estimation des canaux de propagation et des antennes destinataires cibles pour la restitution des données.

L'étape d'estimation du déplacement du point focal courant est réalisée à partir des positions du point focal courant et de l'antenne destinataire de référence à l'instant courant.

Le mouvement relatif est estimé simplement à partir de signaux reçus déterminant un point focal. Aucun procédé complémentaire d'estimation de mouvement basé sur des estimations du déplacement des entités communicantes n'est ainsi nécessaire.

Le point focal courant est estimé par l'entité communicante destinataire à partir d'un vecteur de focalisation d'un signal focalisé, le signal focalisé étant émis par l'antenne d'origine et reçu par l'ensemble des antennes destinataires.

Le point focal est ainsi déterminé simplement par analyse d'un signal focalisé reçu par l'ensemble des antennes destinataires.

Le vecteur de focalisation est représentatif d'une mesure de qualité du signal focalisé reçu par l'ensemble des antennes destinataires.

Ainsi, la détermination du vecteur de focalisation est effectuée par rapport à la qualité du signal reçu ce qui permet d'optimiser le fonctionnement du récepteur de signaux de l'entité communicante destinataire par exemple pour garantir un débit maximal ou encore pour une restitution des données avec un minimum d'erreur.

La sélection pour un instant suivant, de l'antenne destinataire de référence et de l'antenne destinataire cible est fonction d'une estimation de la position d'un point focal suivant à partir de l'estimation du déplacement du point focal courant.

La sélection, pour un instant suivant, de l'antenne destinataire cible et l'antenne destinataire de référence minimise une distance entre l'antenne cible pour l'instant suivant et l'estimation du point focal suivant.

La sélection des antennes destinataires de référence et cible est ainsi effectuée afin d'obtenir une focalisation sur l'antenne cible à partir d'une estimation de canal par rapport à une antenne de référence en intégrant le déplacement du point focal.

La sélection de l'antenne cible peut en outre être fonction d'un barycentre géométrique de l'ensemble des antennes destinataires. Cette sélection permet de concentrer l'énergie du signal vers le centre de l'ensemble des antennes de l'entité communicante destinataire, et limiter ainsi la dispersion de l'énergie autour de l'entité communicante destinataire.

L'invention concerne également un dispositif de compensation dynamique d'un mouvement relatif d'une entité communicante d'origine par rapport à une entité communicante destinataire comportant un ensemble d'antennes destinataires, un signal de données d'antenne émis par une antenne d'origine de l'entité communicante d'origine étant pré-égalisé par retournement temporel d'un canal de propagation estimé entre l'antenne d'origine et une antenne destinataire de référence à un instant courant. Le dispositif comporte:

- des moyens d'estimation d'un point focal courant,
- des moyens d'estimation d'un déplacement du point focal courant,
- des moyens de sélection d'une antenne destinataire de référence destinée à l'estimation du canal de propagation et une antenne destinataire cible destinée à recevoir le signal de données pour un instant suivant.

L'invention concerne également une entité communicante d'un système de communication radio comportant au moins un dispositif précité de compensation d'un mouvement relatif d'une entité communicante d'origine par rapport à une entité communicante destinataire.

L'invention concerne également un système de communication radio communication radio comportant au moins une entité communicante selon l'invention.

Le dispositif, l'entité communicante et le système présentent des avantages analogues à ceux précédemment décrits.

D'autres caractéristiques et avantages de la présente invention apparaîtront plus clairement à la lecture de la description suivante de plusieurs modes particuliers de réalisation de l'invention, donnés à titre de simples exemples illustratifs et non limitatifs, et des dessins annexés, sur lesquels :

- la figure 1 est un bloc diagramme schématique d'une entité communicante d'origine communicant avec une entité destinataire selon l'invention,
- la figure 2 représente les étapes du procédé de compensation du mouvement relatif de l'entité communicante d'origine selon un mode particulier de réalisation de l'invention,
- la figure 3 représente une configuration d'antennes destinataires alignées,
- la figure 4 représente un exemple de déplacement d'un point focal pour une configuration d'antennes destinataires réparties dans un plan,
- la figure 5 représente les sous-étapes de sélection d'antennes destinataires dans un mode particulier de réalisation,
- la figure 6 représente les sous-étapes de sélection d'antennes destinataires dans un deuxième mode particulier de réalisation.

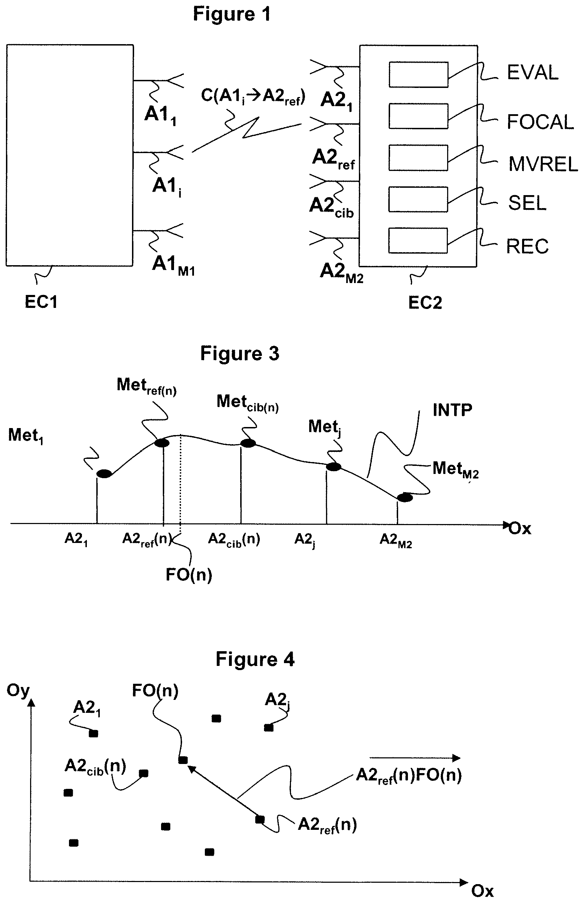

En référence à la **figure 1,** une entité communicante EC1 est apte à communiquer avec une entité destinataire EC2 au travers d'un réseau de communication radio non représenté sur la figure.

Par exemple, le réseau de communication radio est un réseau de radiocommunication cellulaire de type UMTS (pour "Universal Mobile Communication System" en anglais) défini par l'organisme de spécification 3GPP (pour "3rd Generation Partnership Project" en anglais), et ses évolutions dont le 3GPP-LTE (pour "Long Term Evolution" en anglais).

Les entités communicantes peuvent être des terminaux mobiles, des stations de base terrestre ou satellitaires, des points d'accès, ou tout équipement équipé d'une carte communicante.

Par soucis de clarté, l'invention est présentée pour la transmission unidirectionnelle d'un signal de données de l'entité communicante EC1 à destination d'une entité communicante EC2. L'invention concerne également les transmissions bidirectionnelles.

L'entité communicante d'origine EC1 comporte M1 antennes d'origine ($AI_1...AI_{M1}$) avec M1 supérieur ou égal à 1. L'entité communicante destinataire comporte M2 antennes ($A2_1,....A2_{ref}, ..A2_{cib}, ..A2_{M2}$) avec M2 supérieur ou égal à 2.

L'entité communicante d'origine EC1 est apte à émettre un signal de données composé d'un ou d'une pluralité de signaux d'antenne à destination de l'entité communicante destinataire EC2. De tels signaux d'antenne sont définis à partir de données binaires par des méthodes de modulation, codage et répartition sur les M1 antennes, par exemple selon l'article "Space block Coding; A simple transmitter diversity technique for Wireless communication" de S. Alamouti, publié dans la revue IEEE Journal Aeras Communications, vol 16pp 1456 à 1458, en octobre 1998.

L'entité communicante destinataire EC2 est agencée pour recevoir le signal de données et restituer les données à partir du signal reçu sur une antenne cible $A2_{cib}$ de l'ensemble des antennes destinataires.

Un signal d'antenne, émis par l'antenne d'origine $A1_i$, i variant de 1 à M1, est pré filtré par application de coefficients d'une réponse impulsionnelle estimée retournée temporellement. La réponse impulsionnelle est représentative du canal de propagation $C(A1 \rightarrow A2_{ref})$ entre l'antenne d'origine et une antenne destinataire de référence $A2_{ref}$.

Dans le cas d'une transmission en mode TDD, les transmissions dans un premier sens, par exemple de l'entité communicante d'origine vers l'entité communicante destinataire, et les transmission dans un deuxième sens, inverse du premier sens, s'effectuent sur une même fréquence porteuse à des instants différents. L'estimation de la réponse impulsionnelle du canal de propagation est classiquement réalisée par l'entité communicante d'origine à partir de l'analyse des signaux de transmission du deuxième sens.

Dans le cas d'une transmission en mode FDD, les transmissions dans le premier sens et les transmissions dans le sens inverse sont effectuées dans des bandes de fréquences distinctes. La connaissance par l'entité communicante d'origine du canal de propagation correspondant au premier sens de transmission peut être, par exemple, obtenue par la délivrance d'une estimation du canal de propagation effectuée par l'entité communicante destinataire.

Selon le mode de transmission considéré, l'entité communicante d'origine ou l'entité communicante destinataire est ainsi agencée pour réaliser l'estimation d'un canal de propagation entre une antenne d'origine et une antenne destinataire de référence. Si cette estimation est réalisée par l'entité communicante destinataire, celle-ci est apte à délivrer l'estimation à l'entité communicante d'origine, ou à délivrer des coefficients de pré-égalisation obtenus par retournement temporel de l'estimation.

Dans la figure 1 sont seulement représentés des moyens inclus dans l'entité communicante destinataire en relation avec l'invention.

L'entité communicante destinataire comporte en outre une unité centrale de commande, non représentée, à laquelle les moyens inclus sont reliés, et destinée à contrôler le fonctionnement de ces moyens.

L'entité communicante destinataire comporte:

- un évaluateur EVAL de focalisation agencé pour déterminer un vecteur de focalisation à partir d'un signal focalisé, émis par l'entité communicante d'origine, et reçu sur chaque antenne de l'entité communicante destinataire. Une composante du vecteur de focalisation est donnée par une mesure de qualité du signal reçu sur une antenne destinataire,
- un estimateur FOCAL de point focal agencé pour estimer un point focal courant. L'estimateur FOCAL peut estimer ce point focal à partir du vecteur de focalisation délivré par l'évaluateur EVAL,
- un estimateur MVREL de déplacement du point focal courant,
- un sélecteur d'antennes SEL agencé pour sélectionner une antenne destinataire de référence et une antenne destinataire cible pour un instant suivant. Les signaux d'antennes émis par l'entité communicante d'origine sont pré-égalisés par retournement temporel des réponses impulsionnelles estimées entre les antennes d'origine et l'antenne de référence,
- un récepteur REC agencé pour restituer les données d'un signal de données reçu sur l'antenne destinataire cible.

Les différents moyens de l'entité communicante destinataire peuvent être mis en oeuvre par des techniques analogiques ou numériques bien connues de l'homme du métier. Le fonctionnement des moyens présentés ci-dessus est détaillé dans la suite par la description du procédé de compensation dynamique du mouvement relatif d'une entité communicante d'origine.

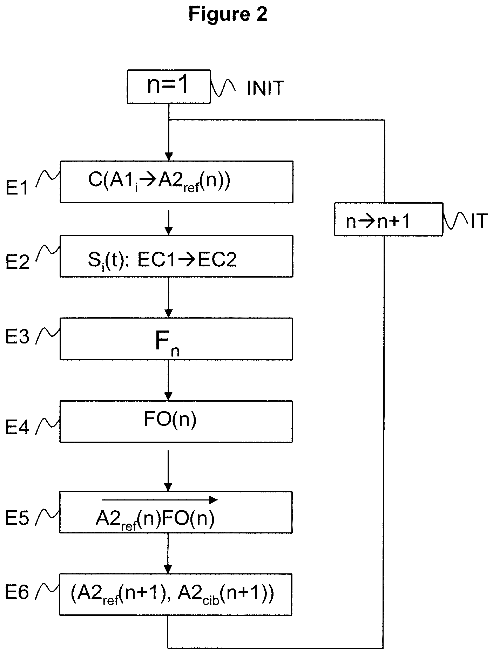

Un exemple particulier de mise en oeuvre du procédé est maintenant décrit en référence à la **figure 2.**

Le procédé est réitéré en fonction d'une fréquence d'itération $F_{iter}$ configurable. Pendant la durée de transmission de données de l'entité communicante d'origine EC1 vers l'entité communicante destinataire EC2, la fréquence d'itération $F_{iter}$ est déterminée en fonction de la fréquence d'obtention d'une estimation de canal performante. Lorsqu'aucune donnée n'est transmise entre les entités communicantes, la fréquence d'itération $F_{iter}$ est déterminée afin de maintenir la connaissance du couple antenne destinataire de référence et antenne destinataire cible, et être prêt pour une prochaine transmission de données. Les itérations sont symbolisées par une étape IT d'itération d'un indice n. Une étape préalable d'initialisation INIT correspond à l'indice n=1.

Lors de l'étape d'initialisation INIT, l'entité communicante destinataire sélectionne une antenne destinataire de référence $A2_{ref}(1)$ et une antenne destinataire cible $A2_{cib}(1)$ parmi l'ensemble des antennes destinataires.

L'antenne destinataire de référence correspondant à la $n^{ième}$ itération du procédé est notée $A2_{ref}(n)$ et l'antenne destinataire cible est notée $A2_{cib}(n)$.

A l'étape E1, l'entité communicante d'origine détermine des coefficients de pré-égalisation à appliquer à un signal de données, ou à un signal de référence, composé de M1 signaux d'antennes. Les coefficients de pré-égalisation appliqués à un signal d'antenne $S_i(t)$ du signal de données ou de référence, émis par une antenne d'origine $A1_i$ à un

instant courant t, i variant de 1 à M1, sont donnés par le retournement temporel d'une réponse impulsionnelle estimée du canal de propagation C(A1$_i$→A2$_{ref}$(n)) entre une antenne d'origine A1$_i$ et une antenne destinataire de référence A2$_{ref}$(n).

Cette détermination peut être réalisée, par exemple, par émission d'impulsions ou bien encore de pilotes par l'entité communicante d'origine ou destinataire, respectivement, suivi d'une estimation du canal de propagation par l'entité communicante destinataire ou d'origine, respectivement, selon le mode de transmission FDD ou TDD, respectivement. Dans le cas d'une estimation du canal de propagation effectuée par l'entité communicante destinataire, celle-ci délivre l'estimation à l'entité communicante d'origine.

A l'étape E2, l'entité communicante d'origine émet le signal de données ou le signal de référence, dit signal focalisé, obtenu par pré filtrage de chacun des signaux d'antenne S$_i$(t) par les coefficients de pré-égalisation déterminés lors de l'étape E1.

A l'étape E3, l'évaluateur de focalisation EVAL de l'entité communicante destinataire détermine un vecteur de focalisation F$_n$=(Met$_1$,..Met$_{ref(n)}$,..Met$_{cib(n)}$,..Met$_{M2}$) à partir du signal focalisé, émis par l'entité communicante d'origine, et reçu sur chaque antenne de l'entité communicante destinataire. Une composante Met$_i$ du vecteur de focalisation F$_n$, F$_n$ comportant M2 composantes, est donnée par une mesure de qualité du signal focalisé reçu sur l'antenne destinataire A2$_i$. La composante Met$_{cib(n)}$ correspond à l'antenne destinataire cible de la nième itération et la composante Met$_{ref(n)}$ correspond à l'antenne destinataire de référence de la nième itération.

La mesure de qualité du signal focalisé reçu peut être par exemple, et de façon non limitative, l'énergie du signal reçu, le débit instantané du signal, le rapport signal sur bruit C/N ou signal sur interférence C/I, ou encore un taux d'erreur sur les données.

A l'étape E4, l'estimateur de point focal FOCAL de l'entité communicante destinataire estime un point focal FO(n) à partir du vecteur de focalisation F$_n$. L'estimation du point focal peut être réalisée par toute méthode de détermination d'un point maximum d'une fonction spatiale estimée à partir d'échantillons. Le point focal correspond ainsi au maximum d'une fonction spatiale estimée par exemple par interpolation linéaire, surfacique ou volumétrique des mesures du vecteur de focalisation F$_n$.

Le point focal est déterminé, par exemple, à partir d'un référentiel de coordonnées (X,Y) des antennes destinataires. La **figure 3** représente une configuration d'installation des antennes destinataires alignées selon un segment de droite d'un axe Ox. La **figure 4** représente une configuration d'installation des antennes destinataires dans le plan selon des axes Ox et Oy.

En référence à la figure 3, dans le cas d'antennes destinataires A2$_j$,j variant de 1 à M2, situées sur un segment de droite, le point focal FO(n) est par exemple déterminé par la coordonnée, sur ce segment de droite, du maximum d'une fonction d'interpolation INTP. La fonction d'interpolation est déterminée à partir des mesures de qualité Met$_j$ du signal focalisé reçu sur chaque antenne destinataire A2$_j$, j variant de 1 à M2. La figure 3 illustre également une position des antennes destinataires cible A2$_{ref}$(n) et de référence A2$_{cib}$(n).

En variante, le point focal est déterminé par la position de l'antenne destinataire pour laquelle la mesure de qualité est maximum.

Il est à noter qu'en l'absence de mouvement relatif de l'entité communicante d'origine, le point focal FO(n) correspond à l'antenne destinataire de référence A2$_{ref}$(n). En effet, le signal d'antenne S$_i$(t) est focalisé sur l'antenne destinataire A2$_{ref}$(n) par retournement temporel de la réponse impulsionnelle du canal C(A1$_i$→A2$_{ref}$(n)). A l'inverse, lorsqu'il y a mouvement relatif, le point focal ne correspond plus à l'antenne de référence A2$_{ref}$(n).

A l'étape E5, l'estimateur de déplacement du point focal MVREL de l'entité communicante destinataire détermine le déplacement du point focal FO(n) à partir de des positions du point focal FO(n) et de l'antenne destinataire de référence A2$_{ref}$(n). En référence à la figure 4, le déplacement du point focal est ainsi illustré par le vecteur de déplacement

$\overrightarrow{A2_{ref}(n)FO(n)}$ pour une répartition des antennes destinataires dans un plan. Le vecteur de déplacement est le vecteur nul si le point focal correspond à l'antenne de référence A2$_{ref}$(n), c'est-à-dire en l'absence de mouvement relatif.

A l'étape E6, le sélecteur d'antennes SEL de l'entité communicante destinataire sélectionne, pour l'itération suivante du procédé, une antenne destinataire de référence A2$_{ref}$(n+1) et une antenne destinataire cible A2$_{cib}$(n+1) parmi l'ensemble d'antennes destinataires. La sélection est effectuée afin de compenser le mouvement relatif de l'entité communicante d'origine.

Les antennes de référence et cible sont sélectionnées de telle sorte qu'une distance entre l'antenne cible A2$_{cib}$(n+1) et la position estimée du point focal à l'itération suivante soit minimale. La position estimée du point focal à l'itération suivante n+1, notée FO$_{est}$(n+1), est donnée par la coordonnée correspondante au vecteur de déplacement appliqué à l'antenne de référence sélectionnée A2$_{ref}$(n+1).

Les antennes destinataires de référence et cible sont donc sélectionnées afin de minimiser la distance entre l'antenne cible A2$_{cib}$(n+1) et le point focal estimé à l'itération suivante dit point focal suivant, avec:

Les antennes de référence et cible peuvent donc être sélectionnées par toute méthode d'optimisation bien connues de l'homme du métier.

A titre d'exemple illustratif, l'antenne destinataire cible A2cib(n+1) est une antenne quelconque de l'ensemble des antennes destinataires, par exemple choisie aléatoirement ou fixée arbitrairement. La position estimée du point focal suivant est déterminée pour toutes les antennes destinataires A2k, k compris entre 1 et M2 et défini par:

$$FO_{est}(n + 1) = A2_k + \overline{A2_{ref}(n)\,FO(n)}.$$

L'antenne destinataire de référence A2ref(n+1) sélectionnée est alors l'antenne destinataire A2k, k compris entre 1 et M2, qui minimise la distance entre l'antenne destinataire cible A2cib(n+1) et la position estimée du point focal suivant FO_est(n+1) déterminée à partir de cette antenne destinataire A2k.

En variante, la position estimée du point focal suivant FO_est(n+1) est déterminé pour un sous ensemble des antennes destinataire A2k.

En variante, l'antenne destinataire cible A2cib(n+1) sélectionnée est l'antenne destinataire la plus proche du barycentre géométrique de l'ensemble des antennes destinataires. L'antenne destinataire de référence A2ref(n+1) sé-lectionnée est de même l'antenne A2k, k compris entre 1 et M2, qui minimise la distance entre l'antenne destinataire cible A2cib(n+1) et la position estimée du point focal suivant FO_est(n+1) déterminée à partir de cette antenne destinataire A2k.

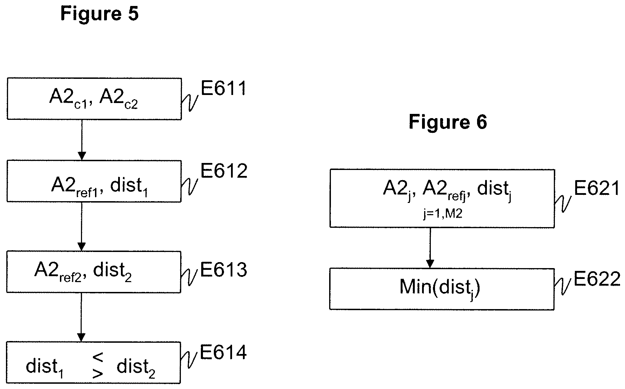

En variante, les antennes destinataires cible et de référence sont sélectionnées conjointement, l'antenne des-tinataire cible étant la plus proche du barycentre géométrique de l'ensemble des antennes destinataires. La sélection peut alors s'effectuer, par exemple, par la mise en oeuvre des sous étapes de sélection d'antennes illustrées en **figure 5.**

Lors d'une étape E611, le sélecteur d'antennes de l'entité communicante destinataire sélectionne deux anten-nes destinataires cible A2c1, A2c2 les plus proches du barycentre géométrique de l'ensemble des antennes destinataires.

Lors d'une étape E612, le sélecteur d'antennes de l'entité communicante destinataire sélectionne une première antenne destinataire de référence A2ref1 qui minimise une distance dist1, La distance dist1 est évaluée entre l'antenne cible A2c1 et la position estimée du point focal suivant FO_est(n+1) déterminée à partir de l'antenne A2ref1.

Lors d'une étape E613, le sélecteur de l'entité communicante destinataire sélectionne une deuxième antenne destinataire de référence A2ref2 qui minimise une distance dist2. La distance dist2 est évaluée entre l'antenne cible A2c2 et la position estimée du point focal suivant FO_est(n+1) ) déterminée à partir de l'antenne A2ref2.

Lors de l'étape E614, si la distance dist1 est supérieure à la distance dist2, ou encore supérieure ou égale, l'antenne destinataire de référence A2ref(n+1) sélectionnée est l'antenne A2ref2, et l'antenne destinataire cible A2cib(n+1) sélectionnée est l'antenne A2c2. Dans le cas contraire, l'antenne destinataire de référence A2ref(n+1) sélectionnée est l'antenne A2ref1, et l'antenne destinataire cible A2cib(n+1) sélectionnée est l'antenne A2c1.

En variante, les antennes destinataires cible et de référence sont sélectionnées conjointement, l'antenne destinataire cible pouvant être éloignée du barycentre géométrique de l'ensemble des antennes destinataires. La sélection peut alors s'effectuer, par exemple, par la mise en oeuvre des sous étapes de sélection d'antennes illustrées en **figure 6.**

Lors d'une étape E621, pour chaque antenne destinataire A2j, j variant de 1 à M2, le sélecteur d'antennes de l'entité communicante sélectionne une antenne destinataire de référence A2refj telle que la distance distj entre l'antenne destinataire A2j et la position estimée du point focal suivant FO_est(n+1) déterminée à partir de l'antenne A2refj est minimale.

Lors de l'étape E622, l'entité communicante destinataire détermine l'indice j, j variant de 1 à M2, telle que la distance distj soit minimale. L'antenne destinataire de référence A2ref(n+1) sélectionnée est ainsi l'antenne A2refj et l'antenne destinataire cible A2cib(n+1) sélectionnée est l'antenne A2j.

Après sélection du couple d'antenne A2cib(n+1) et A2ref(n+1), lors de l'étape E6 du procédé de compensation du mouvement relatif, les étapes E1 à E6 sont mises en oeuvre avec ce nouveau couple d'antennes. Ainsi, le récepteur REC de l'entité communicante destinataire reçoit et restitue les données à partir d'un signal reçu sur l'antenne destinataire cible A2cib(n+1), les signaux d'antennes étant pré-égalisés par retournement temporel de l'estimation des réponses impulsionnelles des canaux de propagation C(A1i→A2ref(n+1)) entre les antennes d'origine A1i, et l'antenne destinataire de référence A2ref(n+1), i variant de 1 à M1.

Dans un mode particulier de réalisation, l'entité communicante destinataire est agencée pour recevoir et restituer les données à partir des antennes destinataires recevant sur une partie des signaux reçus par un ensemble d'antennes destinataires définissant un ensemble d'antennes destinataires cibles. Les étapes du procédé sont alors mises en oeuvre pour chaque antenne destinataire cible de l'ensemble des antennes destinataires cibles, une antenne destinataire de référence étant associée à chaque antenne destinataire cible.

Le procédé peut également être mis en oeuvre pour une transmission bidirectionnelle. Dans ce mode particulier de réalisation, le procédé est mise en oeuvre dans les deux sens de transmission de telle sorte que des signaux ne soient pas émis simultanément dans les deux sens de transmission.

L'invention décrite ici concerne un dispositif de compensation dynamique du mouvement relatif d'une entité communicante d'origine en communication avec une entité communicante destinataire, et mis en oeuvre dans une entité communicante destinataire. En conséquence, l'invention s'applique également à un programme d'ordinateur, notamment un programme d'ordinateur sur ou dans un support d'enregistrement d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter celles des étapes du procédé selon l'invention mises en oeuvre dans l'entité communicante destinataire.

**Revendications**

1. Procédé de compensation dynamique d'un mouvement relatif d'une entité communicante d'origine (EC1) par rapport à une entité communicante destinataire (EC2) comportant un ensemble d'antennes destinataires ($A2_1,..A2_{M2}$), un signal de données d'antenne émis par une antenne d'origine de l'entité communicante d'origine étant pré-égalisé par retournement temporel d'un canal de propagation estimé entre ladite antenne d'origine et une antenne destinataire de référence ($A2_{ref}(n)$) à un instant courant, ledit procédé comportant les étapes itératives de :

   - estimation (E4) par l'entité communicante destinataire d'un point focal courant (FO(n)),

   - estimation (E5) d'un déplacement du point focal courant ($\overline{A2_{ref}(n)\,FO(n)}$),

   - sélection (E6), pour un instant suivant, d'une antenne destinataire de référence ($A2_{ref}(n+1)$) destinée à l'estimation du canal de propagation et d'une antenne destinataire cible ($A2_{cib}(n+1)$) destinée à recevoir ledit signal de données.

2. Procédé selon la revendication 1 dans lequel l'étape d'estimation du déplacement du point focal courant est réalisée à partir des positions du point focal courant et de l'antenne destinataire de référence à l'instant courant.

3. Procédé selon l'un des revendications 1 ou 2 dans lequel le point focal courant est estimé par l'entité communicante destinataire à partir d'un vecteur de focalisation ($F_n$) d'un signal focalisé, ledit signal focalisé étant émis par l'antenne d'origine et reçu par l'ensemble des antennes destinataires.

4. Procédé selon la revendication 3 dans lequel le vecteur de focalisation est représentatif d'une mesure de qualité du signal focalisé reçu par l'ensemble des antennes destinataires.

5. Procédé selon l'une quelconque des revendications 1 à 4 dans lequel la sélection, pour un instant suivant, de l'antenne destinataire de référence et de l'antenne destinataire cible est fonction d'une estimation de la position d'un point focal suivant à partir de l'estimation du déplacement du point focal courant.

6. Procédé selon la revendication 5 dans lequel la sélection de l'antenne destinataire cible est en outre fonction d'un barycentre géométrique de l'ensemble des antennes destinataires.

7. Procédé selon l'une des revendications 5 ou 6 dans lequel la sélection, pour un instant suivant, de l'antenne destinataire cible et l'antenne destinataire de référence minimise une distance entre l'antenne destinataire cible pour l'instant suivant et l'estimation du point focal suivant.

8. Dispositif de compensation dynamique d'un mouvement relatif d'une entité communicante d'origine (EC1) par rapport à une entité communicante destinataire (EC2) comportant un ensemble d'antennes destinataires ($A2_1,..A2_{M2}$), un signal de données d'antenne émis par une antenne d'origine de l'entité communicante d'origine étant pré-égalisé par retournement temporel d'un canal de propagation estimé entre ladite antenne d'origine et une antenne destinataire de référence à un instant courant, ledit dispositif comportant

   - des moyens d'estimation (FOCAL) d'un point focal courant,

EP 2 279 569 B1

- des moyens d'estimation (MVREL) d'un déplacement du point focal courant,
- des moyens de sélection (SEL) d'une antenne destinataire de référence destinée à l'estimation du canal de propagation et une antenne destinataire cible destinée à recevoir ledit signal de données pour un instant suivant.

9. Entité communicante d'un système de communication radio comportant au moins un dispositif selon la revendication 8.

10. Système de communication radio comportant au moins une entité communicante selon la revendication 9.

11. Programme d'ordinateur pour une entité communicante comprenant les instructions logicielles pour commander la mise en oeuvre par ladite entité de celles des étapes du procédé selon l'une quelconque des revendications 1 à 7 lorsque le programme est exécuté par l'entité communicante.

**Patentansprüche**

1. Verfahren zur dynamischen Kompensation einer relativen Bewegung einer kommunizierenden Ursprungsinstanz (EC1) bezüglich einer kommunizierenden Empfangsinstanz (EC2), die eine Einheit von Empfangsantennen ($A2_1$, ..., $A2_{M2}$) aufweist, wobei ein von einer Ursprungsantenne der kommunizierenden Ursprungsinstanz gesendetes Antennendatensignal durch zeitliche Umkehr eines geschätzten Ausbreitungskanals zwischen der Ursprungsantenne und einer Bezugsempfangsantenne ($A2_{ref}(n)$) zu einem aktuellen Zeitpunkt vorentzerrt wird, wobei das Verfahren die folgenden iterativen Schritte aufweist:

   - Schätzung (E4) eines aktuellen Fokussierpunkts (FO(n)) durch die kommunizierende Empfangsinstanz,
   - Schätzung (E5) einer Verschiebung des aktuellen Fokussierpunkts $(\overline{A2_{ref}})FO(n))$,
   - Auswahl (E6), für einen folgenden Zeitpunkt, einer Bezugsempfangsantenne ($A2_{ref}(n+1)$), die zur Schätzung des Ausbreitungskanals bestimmt ist, und einer Zielempfangsantenne ($A2_{cib}(n+1)$), die zum Empfang des Datensignals bestimmt ist.

2. Verfahren nach Anspruch 1, wobei der Schritt der Schätzung der Verschiebung des aktuellen Fokussierpunkts ausgehend von den Stellungen des aktuellen Fokussierpunkts und der Bezugsempfangsantenne zum aktuellen Zeitpunkt durchgeführt wird.

3. Verfahren nach einem der Ansprüche 1 oder 2, wobei der aktuelle Fokussierpunkt durch die kommunizierende Empfangsinstanz ausgehend von einem Fokussiervektor ($F_n$) eines fokussierten Signals geschätzt wird, wobei das fokussierte Signal von der Ursprungsantenne gesendet und von der Einheit der Empfangsantennen empfangen wird.

4. Verfahren nach Anspruch 3, wobei der Fokussiervektor für eine Qualitätsmessung des fokussierten Signals repräsentativ ist, das von Einheit der Empfangsantennen empfangen wird.

5. Verfahren nach einem der Ansprüche 1 bis 4, wobei die Auswahl, für einen folgenden Zeitpunkt, der Bezugsempfangsantenne und der Zielempfangsantenne von einer Schätzung der Stellung eines folgenden Fokussierpunkts ausgehend von der Schätzung der Verschiebung des aktuellen Fokussierpunkts abhängt.

6. Verfahren nach Anspruch 5, wobei die Auswahl der Zielempfangsantenne außerdem von einem geometrischen Schwerpunkt der Einheit der Empfangsantennen abhängt.

7. Verfahren nach einem der Ansprüche 5 oder 6, wobei die Auswahl, für einen folgenden Zeitpunkt, der Zielempfangsantenne und der Bezugsempfangsantenne einen Abstand zwischen der Zielempfangsantenne für den folgenden Zeitpunkt und der Schätzung des folgenden Fokussierpunkts minimiert.

8. Vorrichtung zur dynamischen Kompensation einer relativen Bewegung einer kommunizierenden Ursprungsinstanz (EC1) bezüglich einer kommunizierenden Empfangsinstanz (EC2), die eine Einheit von Empfangsantennen ($A2_1$, ..., $A2_{M2}$) aufweist, wobei ein von einer Ursprungsantenne der kommunizierenden Ursprungsinstanz gesendetes Antennendatensignal durch zeitliche Umkehr eines geschätzten Ausbreitungskanals zwischen der Ursprungsantenne und einer Bezugsempfangsantenne ($A2_{ref}(n)$) zu einem aktuellen Zeitpunkt vorentzerrt wird, wobei die Vorrichtung aufweist

- Schätzeinrichtungen (FOCAL) eines aktuellen Fokussierpunkts,
- Schätzeinrichtungen (MVREL) einer Verschiebung des aktuellen Fokussierpunkts,
- Auswahleinrichtungen (SEL) einer Bezugsempfangsantenne, die zur Schätzung des Ausbreitungskanals bestimmt ist, und einer Zielempfangsantenne, die für den Empfang des Datensignals für einen folgenden Zeitpunkt bestimmt ist.

9. Kommunizierende Instanz eines Funkkommunikationssystems, die mindestens eine Vorrichtung nach Anspruch 8 aufweist.

10. Funkkommunikationssystem, das mindestens eine kommunizierende Instanz nach Anspruch 9 aufweist.

11. Computerprogramm für eine kommunizierende Instanz, das die Softwareanweisungen zur Steuerung der Durchführung durch die Instanz von denjenigen der Schritte des Verfahrens nach einem der Ansprüche 1 bis 7 enthält, wenn das Programm von der kommunizierenden Instanz ausgeführt wird.

**Claims**

1. Method for the dynamic compensation of a relative movement of a source communicating entity (EC1) with respect to a recipient communicating entity (EC2) having an array of recipient antennae ($A2_1$, ..., $A2_{M2}$), an antenna data signal, emitted by a source antenna of the source communicating entity, being pre-equalized through time reversal of an estimated propagation channel between said source antenna and a reference recipient antenna ($A2_{ref}(n)$) at a current instant,
said method including the iterative steps of:

   - estimation (E4), by the recipient communicating entity, of a current focal point (FO(n)),
   - estimation (E5) of a displacement of the current focal point $(\overline{A2_{ref}(n)\,FO(n)})$,
   - selection (E6), for a following instant, of a reference recipient antenna ($A2_{ref}(n+1)$) intended for the estimation of the propagation channel and of a target recipient antenna ($A2_{cib}(n+1)$) intended to receive said data signal.

2. Method according to Claim 1, wherein the step of estimating the displacement of the current focal point is performed on the basis of the positions of the current focal point and of the reference recipient antenna at the current instant.

3. Method according to either of Claims 1 and 2, wherein the current focal point is estimated by the recipient communicating entity on the basis of a focussing vector ($F_n$) of a focussed signal, said focussed signal being emitted by the source antenna and received by the array of recipient antennae.

4. Method according to Claim 3, wherein the focussing vector is representative of a measurement of the quality of the focussed signal received by the array of recipient antennae.

5. Method according to any one of Claims 1 to 4, wherein the selection, for a following instant, of the reference recipient antenna and of the target recipient antenna is dependent on an estimation of the position of a following focal point on the basis of the estimation of the displacement of the current focal point.

6. Method according to Claim 5, wherein the selection of the target recipient antenna is furthermore dependent on a geometric barycentre of the array of recipient antennae.

7. Method according to either of Claims 5 and 6, wherein the selection, for a following instant, of the target recipient antenna and the reference recipient antenna minimizes a distance between the target recipient antenna for the following instant and the estimation of the following focal point.

8. Device for the dynamic compensation of a relative movement of a source communicating entity (EC1) with respect to a recipient communicating entity (EC2) having an array of recipient antennae ($A2_1$,...,$A2_{M2}$) , an antenna data signal, emitted by a source antenna of the source communicating entity, being pre-equalized through time reversal of an estimated propagation channel between said source antenna and a reference recipient antenna at a current instant,
said device including

- means (FOCAL) for estimating a current focal point,
- means (MVREL) for estimating a displacement of the current focal point,
- means (SEL) for selecting a reference recipient antenna intended for the estimation of the propagation channel and a target recipient antenna intended to receive said data signal for a following instant.

9. Communicating entity for a radio communication system including at least one device according to Claim 8.

10. Radio communication system including at least one communicating entity according to Claim 9.

11. Computer program for a communicating entity, comprising software instructions for controlling the implementation, by said entity, of those of the steps of the method according to any one of Claims 1 to 7 when the program is executed by the communicating entity.

## Figure 1

$C(A1_i \rightarrow A2_{ref})$

EVAL
FOCAL
MVREL
SEL
REC

## Figure 3

## Figure 4

**Figure 2**

$$n=1 \quad \text{INIT}$$

E1  $C(A1_i \rightarrow A2_{ref}(n))$

$n \rightarrow n+1 \quad \text{IT}$

E2  $S_i(t): EC1 \rightarrow EC2$

E3  $F_n$

E4  $FO(n)$

E5  $\overrightarrow{A2_{ref}(n)FO(n)}$

E6  $(A2_{ref}(n+1), A2_{cib}(n+1))$

## Figure 5

$A2_{c1}$, $A2_{c2}$  ⟍ E611

$A2_{ref1}$, $dist_1$  ⟍ E612

$A2_{ref2}$, $dist_2$  ⟍ E613

$dist_1 \lessgtr dist_2$  ⟍ E614

## Figure 6

$A2_j$, $A2_{refj}$, $dist_j$
$j=1, M2$  ⟍ E621

$Min(dist_j)$  ⟍ E622

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 109533 A

**Littérature non-brevet citée dans la description**

- **DAVID GESBERT ; MANSOOR SHAFI ; DA-SHAN SHUI ; PETER J. SMITH ; AYMAN NAGUID.** From Theory to Practice: an overview of MIMO space-time codes wireless system. *IEEE Journal on Selected Areas in Communication,* Avril 2003, vol. 21

- **S. ALAMOUTI.** Space block Coding; A simple transmitter diversity technique for Wireless communication. *IEEE Journal Aeras Communications,* Octobre 1998, vol. 16, 1456-1458